# EUROPÄISCHE PATENTSCHRIFT

(11) **EP 2 054 453 B1**
(45) Veröffentlichungstag und Bekanntmachung des Hinweises auf die Patenterteilung: **09.12.2009**
(21) Anmeldenummer: 07787792.6
(22) Anmeldetag: 23.07.2007
(51) Int. Cl.: C08F 220/14, C09D 4/06

(54) **METHACRYLATHARZE ZUR HERSTELLUNG VON FAHRBAHNMARKIERUNGEN**
METHACRYLATE RESINS FOR PRODUCING ROAD MARKINGS
RÉSINE DE MÉTHACRYLATE POUR LA FABRICATION DE MARQUAGES DE ROUTES

(30) Priorität: 25.08.2006 DE 102006039849
(43) Veröffentlichungstag der Anmeldung: 06.05.2009
(73) Patentinhaber: Evonik Röhm GmbH, 64293 Darmstadt (DE)
(72) Erfinder: NEUGEBAUER, Peter, 65552 Limburg (DE); SCHMITT, Günter, 64291 Darmstadt (DE); KIZEWSKI, Ingrid, 63457 Hanau (DE); RAAB, Dieter, 63517 Rodenbach (DE); HEEB, Heike, 63526 Erlensee (DE)
(86) Internationale Anmeldenummer: PCT/EP2007/057547
(87) Internationale Veröffentlichungsnummer: WO 2008/022861

(56) Entgegenhaltungen:
- EP-A1- 0 965 619
- WO-A-03/053596
- US-A1- 2003 099 819

## Beschreibung

Die Erfindung betrifft Methacrylatharze sowie deren Verwendung.

Zur Herstellung von Extrusions- und Spritzharzsystemen werden neben Methylmethacrylat, Präpolymeren, Polymeren und mehrfunktionellen Monomerbausteinen zur flexiblen Vernetzung auch Acrylate, wie beispielsweise n-Butylacrylat oder Ethylhexylacrylat, eingesetzt.
Die Zusammensetzung hat einen entscheidenden Einfluß darauf, bei welchen Temperaturen appliziert werden kann.
Es gibt daher viele verschiedene Systeme.
In DE 1769792 werden etwa 30-70 Gew.-% Methacrylsäuremethylester, etwa 10-25 Gew.-% eines Mischpolymerisats des Vinylchlorids mit Vinylacetat, Weichmacher, Paraffine und Ester der phosphorigen Säure als Überzugs-, Beschichtungs- und Ausfüllmittel verwendet.

WO 01/18102 beschreibt Harzmischungen mit Additiven, die den Schrumpf des Harzes vermindern sollen. Neben Propylenglycol, einer Säure und Anhydriden wird Hydroxyethylmethacrylat verwendet.
Die meisten aufgeführten Systeme weisen eine starke Geruchsbildung auf. Die DE 19826412 offenbart ein geruchsvermindertes, kalthärtendes (Meth)acrylat-Reaktionsharz für Bodenbeschichtungen aus (Meth)acrylaten die auch Comonomere, Vinylaromaten oder Vinylester enthalten.

Acrylate sind Monomere, die einen hohen Dampfdruck besitzen und daher Ihr Geruch leicht wahrgenommen wird. Bei der Handhabung von Acrylaten müssen entsprechende MAK-Werte eingehalten werden.
Aufgabe war es Harze zur Verfügung zu stellen, die auf den Einsatz von Acrylaten verzichten können. Zudem soll eine schnelle Aushärtung erfolgen, sowie ein möglichst großes Temperaturfenster für den Anwendungsbereich zur Verfügung stehen.
Die Aufgabe wurde gelöst durch Reaktionsharze auf Methacrylatbasis enthaltend
0,1-15 Gew.-% Urethan(meth)acrylate,
30-50 Gew.-% Methylmethacrylate,
15-40 Gew.-% (Meth)acryl-polymere und/oder Comonomere,
0-10 Gew.-% Vernetzer,
0-5 Gew.-% Beschleuniger
und weitere Hilfs- und Zusatzstoffe.
Es wurde gefunden, dass diese Reaktionsharze eine hervorragende Basis für Formulierungen sind, die üblicherweise für Fahrbahnmarkierungen und Bodenbeschichtungen verwendet werden.
Überraschend wurde gefunden, dass auf die Verwendung von Acrylaten verzichtet werden kann. Es wurde gefunden, dass durch den Einsatz von Urethan(meth)acrylaten das Eigenschaftsprofil der Reaktionsharze entscheidend verbessert werden kann. Reaktionsharze auf Methacrylatbasis mit Urethan(meth)acrylat zeigen eine starke Verringerung des Geruches, da die leichtflüchtigen Bestandteile eliminiert werden. Zudem zeigen die Methacrylatharze eine gute Flexibilität bei hoher mechanischer Stabilität. Außerdem besitzen sie hervorragende Verlaufs- und
Oberflächeneigenschaften.
Es wurde gefunden, dass die Reaktionsharze sowohl für Spritzharzsysteme, als auch für Extrusionsharzsysteme geeignet sind. Somit kann der Verarbeiter problemlos mit einer Reaktionsharz-Mischung verschiedene Verarbeitungstechnologien nutzen. Die Viskositäten betragen ca. 10-5000 mPas.
Weiterhin wurde gefunden, daß die Harze in einem großen Temperaturfenster von 5-55°C verarbeitet werden können.
Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Eine besonders bevorzugte Ausführungsform ist ein Reaktionsharz der Zusammensetzung
3-10 Gew.-% Urethan(meth)acrylate,
35-45 Gew.-% Methylmethacrylate,
25-35 Gew.-% (Meth)acryl-polymere und/oder Comonomere,
0-3 Gew.-% Vernetzer,
0-3 Gew.-% Beschleuniger
und weitere Hilfs- und Zusatzstoffe.
Als Hilfs- und Zusatzstoffe werden Regler, Weichmacher, Stabilisatoren/Inhibitoren, Wachse, Öle, Aktivatoren und/oder Entschäumer eingesetzt.

Zur Verbesserung der Polymerisationseigenschaften, der mechanischen Eigenschaften, der Haftung zum Untergrund sowie der optischen Anforderungen an die Harze werden (Meth)acryl-polymere und/oder Comonomere zugesetzt. Die (Meth)acryl-polymere und/oder Comonomere sind ausgewählt aus der Gruppe der Acrylpolymere, Methacrylpolymere, Acryl-Methacrylpolymere, Styrolacrylaten, die durch Substanzpolymerisation, Emulsionspolymerisation, Suspensionspolymerisation oder Lösungspolymerisation hergestellt sind. Als Vernetzer werden insbesondere mehrfunktionelle Methacrylate wie Allyl-methacrylat, Ethylenglykcol-dimethacrylat, Diethylenglykol-dimethacrylat, Triethylenglykol-dimethacrylat, Tetraethylen-glykol-dimethacrylat, Polyethylenglykol-dimethacrylat, 1,3-Butandiol-dimethacrylat, 1,4-Butandiol-dimethacrylat, 1,6-Hexandiol-dimethacrylat, 1,12-Dodecandiol-dimethacrylat, Glycerol-dimethacrylat, Trimethylolpropan-trimethacrylat, eingesetzt.
Als Beschleuniger/Aktivatoren können die handelsüblichen Beschleuniger, beispielsweise tertiäre aromatisch substituierte Amine eingesetzt werden.
Zudem können Regler verwendet werden. Bevorzugt werden S-Methacrylate eingesetzt.
Weitere geeignete Hilfs- und Zusatzstoffe sind beispielsweise Paraffine.
Als Weichmacher werden vorzugsweise Ester, Polyole, Öle oder Phthalate eingesetzt. Aus der Gruppe der Stabilisatoren/ Inhibitoren werden vorzugsweise substituierte Phenole, Hydrochinonderivate, Phosphine und Phosphite eingesetzt.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen.

Es wurde gefunden, dass Reaktionsharze nach Anspruch 1 in Formulierungen eingesetzt werden können, die zudem Farbstoffe, Glasperlen, Fein- und Grobfüllstoffe, Netz-, Dispergier- und Verlaufshilfsmittel, UV-Stabilisatoren, und Rheologieadditive, enthalten können.
Für das Einsatzgebiet der Reaktionsharze als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt Titandioxid.

Glasperlen werden vorzugsweise in Formulierungen für Fahrbahnmarkierungen und Flächenmarkierungen als Reflexionsmittel eingesetzt.
Die eingesetzten handelsüblichen Glasperlen haben Durchmesser von 10-2000 µm, bevorzugt 50-800 µm. Die Glasperlen können zur besseren Verarbeitung und Haftung auch silanisiert werden.
Zudem können der Formulierung Feinfüllstoffe und Grobfüllstoffe zugesetzt werden. Diese Materialien dienen auch als Rutschhemmer und werden daher insbesondere in Bodenbeschichtungen eingesetzt.
Feinfüllstoffe werden aus der Gruppe der Calciumcarbonate, Bariumsulfate, Quarze, Quarzmehle, gefällte und pyrogene Kieselsäuren, Pigmente und Cristobalite eingesetzt.

Als Grobfüllstoffe werden Quarze, Cristobalite, Korunde und Aluminiumsilikate eingesetzt.

Netz- und Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter Kieselsäuren mit einer BET-Oberfläche von 10-700 nm²/g besonders geeignet sind. Es wurde gefunden, dass auch Rheologieadditive auf Basis silanisierter pyrogener oder gefällter Kieselsäuren mit einer BET-Oberfläche von 10-700 nm²/g eingesetzt werden können.
Die erfindungsgemäßen Methacrylatharze können direkt oder zur Herstellung von Formulierungen für Fahrbahnmarkierungen und Bodenbeschichtungen beispielsweise auf Asphalt, Beton und Steingut, sowie auf alten Beschichtungen und Markierungen zur Überarbeitung verwendet werden. Die Aushärtung der Harze und Formulierungen erfolgt durch radikalische Polymerisation, die durch Peroxide, UV-Licht oder thermisch initiiert wird.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1 ("Kaltspritzplastik")

Zur Herstellung einer spritzbaren Fahrbahnmarkierungsfarbe, bestehend aus zwei Komponenten (Harz A beschleunigte Komponente; Harz B unbeschleunigte Komponente), die mit einer gängigen Verarbeitungsmaschine im Verhältnis 1:1 verarbeitet wird, wird ein Methylmethacrylatharz bestehend aus
0,1-15 Gew.-% Urethan(meth)acrylaten,
30-50 Gew.-% Methylmethacrylaten,
15-40 Gew.-% (Meth)acryl-polymeren und/oder Comonomeren,
0-10 Gew.-% Vernetzer,
0-5 Gew.-% Beschleunigern
und weiteren Hilfs- und Zusatzstoffen zur Herstellung der Komponente A und ein Methylmethacrylatharz bestehend aus
0,1-15 Gew.-% Urethan(meth)acrylaten,
30-50 Gew.-% Methylmethacrylaten,
15-40 Gew.-% (Meth)acryl-polymeren und/oder Comonomeren,
0-10 Gew.-% Vernetzer
und weiteren Hilfs- und Zusatzstoffen zur Herstellung der Komponente B hergestellt. Diese werden wie folgt zu fertigen Formulierungen konfektioniert.

| **Komponente A** | | | | **Komponente B** | | |
|---|---|---|---|---|---|---|
| Harz A | 42.0 | % | | Harz B | 42.0 | % |
| Disperbyk 163 | 0.3 | % | | Disperbyk 163 | 0.3 | % |
| Byk 410 | 0.1 | % | | Byk 410 | 0.1 | % |
| Titandioxid | 10.0 | % | | Titandioxid | 10.0 | % |
| Feinfüller | 47.6 | % | | Feinfüller | 47.6 | % |

Die Viskosität der fertigen Farbkomponenten beträgt ca. 2.000 mPas, die Dichte 1.6 kg/l. Der Verbrauch beträgt für eine Schichtdicke von 0,7 mm ca. 1.1 kg/m².
Die Formulierungen eigenen sich für einen Farbauftrag der Schichtdicke 0,3-0,8 mm.

Zuerst werden 4,0% Härterpulver (50%iges Dibenzoylperoxid phlegmatisiert in Phthalat) in die unbeschleunigte Farbmischung (Komponente B) eingerührt. Die zwei Komponenten A und B werden dann in separate Tanks der Spritzmaschine gegeben, die die Komponenten im Verhältnis 1:1 mischt und verspritzt. Komponente B ist bei Zimmertemperatur mit Härter mehrere Tage lagerstabil. Bei 55°C jedoch nur 1-2 Stunden.

Die Topf- und Härtungszeiten betragen bei verschiedenen Temperaturen:

| Temperatur (°C) | Topfzeit (min) | Härtungszeit (min) |
|---|---|---|
| +5 | 5 | 20 |
| +20 | 3 | 8 |
| +45 | 3 | 9 |

Die Formulierung wurde mit der Verarbeitungsmaschine "ECOZET" (600µm Schichtdicke) aufgetragen und mit 450 g/m² Glasperlen "Megalux 600-800 MKT 18" (enthaltend Korund) nachgestreut (Typ I). Die Markierung besitzt folgende Eigenschaften:

| **Ges.-Restmonomere %** | **Härte Shore D** | **Abrieb TABER H 22 500g-1000Upm** | **Ausbreitmaß** | | **Haftzug** auf Asphalt | **Weissgrad** HUNTERLAB **Y** |
|---|---|---|---|---|---|---|
| | | | **(2% BPO-Pulv.)** | **(2% BPO I.)** | | |
| 0,15 | 56 | 0,12 | 9,0 cm | 9,0 cm | > 2 N/mm² | 90,54 |

Die Verschleissfähikeit und verkehrtechnischen Eigenschaften wurden von der Bundesanstalt für Strassenwesen geprüft (Prüfnummer: 2005 1 DY 10.11)

| Eigenschaften | **Anzahl der Radüberrollungen (Mio**) | | | | | | | |
|---|---|---|---|---|---|---|---|---|
| | **0** | **0,1** | **0,2** | **0,5** | **1,0** | **2,0** | **3,0** | **4,0** |
| Verschleißfestigheit(%) | 100 | 100 | 100 | 100 | 100 | 100 | 100 | 100 |
| Griffigkeit (SRT-Einheiten) | 54 | 41 | 41 | 40 | 40 | 40 | 39 | 36 |
| Nachtsichtbarkeit, trocken (mcd*m-2 *Ix-1) | 255 | 551 | 522 | 537 | 618 | 591 | 434 | 363 |
| Leuchtdichtekoeffizient Qd (mcd*m-2 *Ix-1) | 250 | 226 | 219 | 222 | 245 | 236 | 229 | 223 |
| Normfarbwert-Koordinaten | x = 0,324 | | | | y = 0,344 | | | |

### Beispiel 2 ("Kaltplastik")

Zur Herstellung einer extrudierbaren Fahrbahnmarkierungsfarbe, bestehend aus zwei Komponenten (Harz A beschleunigte Komponente; Harz B unbeschleunigte Komponente), die mit einer gängigen Verarbeitungsmaschine im Verhältnis 1:1 verarbeitet wird, wird ein Methylmethacrylatharz bestehend aus
0,1-15 Gew.-% Urethan(meth)acrylaten,
30-50 Gew.-% Methylmethacrylaten,
15-40 Gew.-% (Meth)acryl-polymeren und/oder Comonomeren,
0-10 Gew.-% Vernetzer
0-5 Gew.-% Beschleunigern
und weiteren Hilfs- und Zusatzstoffen zur Herstellung der Komponente A und ein Methylmethacrylatharz bestehend aus
0,1-15 Gew.-% Urethan(meth)acrylaten,
30-50 Gew.-% Methylmethacrylaten,
15-40 Gew.-% (Meth)acryl-polymeren und/oder Comonomeren,
0-10 Gew.-% Vernetzer
und weiteren Hilfs- und Zusatzstoffen zur Herstellung der Komponente B hergestellt. Diese werden wie folgt zu fertigen Formulierungen konfektioniert.

| **Komponente A** | | | | **Komponente B** | | |
|---|---|---|---|---|---|---|
| Harz A | 20.00 | % | | Harz B | 20.00 | % |
| Byk 410 | 0.10 | % | | Byk 410 | 0.10 | % |
| Bentone 27 | 0.10 | % | | Bentone 27 | 0.10 | % |
| Titandioxid | 10.00 | % | | Titandioxid | 10.00 | % |
| Feinfüller | 20.00 | % | | Feinfüller | 17.50 | % |
| Grobfüllstoff | 25.00 | % | | Grobfüllstoff | 25.00 | % |
| Reflexperlen | 25.00 | % | | Reflexperlen | 25.00 | % |

Die Viskosität der fertigen Farbkomponenten beträgt ca. 15.000 mPas, die Dichte 1,85 kg/l. Der Verbrauch beträgt für eine Schichtdicke von 2 mm ca. 3,7 kg/m².
Die Formulierungen eigenen sich für einen Farbauftrag der Schichtdicke 1,5-3 mm.

Zuerst werden 4,0% Härterpulver (50%iges Dibenzoylperoxid phlegmatisiert in Phthalat) in die Komponente B eingerührt. Die zwei Komponenten A und B werden dann in separate Tanks der Extrusionsmaschine gegeben, die die Komponenten im Verhältnis 1:1 mischt und extrudiert. Komponente B ist bei Zimmertemperatur mit Härter mehrere Tage Lagerstabil. Bei 55°C jedoch nur 1-2 Stunden.

Die Topf- und Härtungszeiten betragen bei verschiedenen Temperaturen:

| Temperatur (°C) | Topfzeit (min) | Härtungszeit (min) |
|---|---|---|
| +5 | 7 | 17 |
| +20 | 3 | 8 |
| +45 | 4 | 12 |

Die Formulierung wurde mit einem Plastomarker in 2mm Schichtdicke aufgetragen und mit 400g/m² Glasperlen "SWARCO 600-800 MKT 18 3:1" nachgestreut (Typ I). Die Markierung besitzt folgende Eigenschaften:

| **Ges.-Restmonomere %** | **Härte Shore D** | **Abrieb TABER H 22 500g-1000pm** | **Ausbreitmaß** | | **Haftzug** auf Asphalt | **Weissgrad HUNTERLAB Y** |
|---|---|---|---|---|---|---|
| | | | **(2% BPO-Pulv.)** | **(2% BPO I.)** | | |
| 0,03 | 48 | 0,15 | 7,2 cm | 7,2 cm | > 2 N/mm² | 87,21 |

Die Verschleissfähikeit und verkehrtechnischen Eigenschaften wurden von der Bundesanstalt für Strassenwesen geprüft (Prüfnummer: 2005 1 DY 10.12)

| Eigenschaften | **Anzahl der Radüberrollungen (Mio)** | | | | | | | |
|---|---|---|---|---|---|---|---|---|
| | **0** | **0,1** | **0,2** | **0,5** | **1,0** | **2,0** | **3,0** | **4,0** |
| Verschleißfestigheit(%) | 100 | 100 | 100 | 100 | 100 | 100 | 100 | 100 |
| Griffigkeit (SRT-Einheiten) | 62 | 44 | 44 | 41 | 40 | 40 | 37 | 36 |
| Nachtsichtbarkeit, trocken (mcd*m⁻² *Ix⁻¹) | 267 | 523 | 567 | 569 | 554 | 544 | 446 | 372 |
| Leuchtdichtekoeffizient Qd (mcd*m-2 *Ix-1) | 251 | 230 | 244 | 245 | 243 | 235 | 235 | 240 |
| Normfarbwert-Koordinaten | x = 0,326 | | | | y = 0,345 | | | |

### Beispiel 3 ("Agglomerat-Struktur", PATHFINDER^{®})

Zur Herstellung einer extrudierbaren Fahrbahnmarkierungsfarbe des Typs PATHFINDER^{®}, bestehend aus zwei Komponenten (Harz A beschleunigte Komponente; Harz B unbeschleunigte Komponente), die mit einer gängigen Verarbeitungsmaschine im Verhältnis 1:1 verarbeitet wird, wird ein Methylmethacrylatharz bestehend aus
0,1-15 Gew.-% Urethan(meth)acrylaten,
30-50 Gew.-% Methylmethacrylaten,
15-40 Gew.-% (Meth)acryl-polymeren und/oder Comonomeren,
0-10 Gew.-% Vernetzer
0-5 Gew.-% Beschleunigern
und weiteren Hilfs- und Zusatzstoffen zur Herstellung der Komponente A und ein Methylmethacrylatharz bestehend aus
0,1-15 Gew.-% Urethan(meth)acrylaten,
30-50 Gew.-% Methylmethacrylaten,
15-40 Gew.-% (Meth)acryl-polymeren und/oder Comonomeren,
0-10 Gew.-% Vernetzer
und weiteren Hilfs- und Zusatzstoffen zur Herstellung der Komponente B hergestellt. Diese werden wie folgt zu fertigen Formulierungen konfektioniert.

| **Komponente A** | | | | **Komponente B** | | |
|---|---|---|---|---|---|---|
| Harz A | 20,00 | % | | Harz B | 20,00 | % |
| Byk 410 | 0,30 | % | | Byk 410 | 0,30 | % |
| Bentone 27 | 0,30 | % | | Bentone 27 | 0,30 | % |
| Titandioxid | 10,00 | % | | Titandioxid | 10,00 | % |
| Feinfüller | 24,40 | % | | Feinfüller | 24,40 | % |
| Reflexperlen | 45,00 | % | | Reflexperlen | 45,00 | % |

Die Viskosität der fertigen Farbkomponenten beträgt ca. 9 cm nach DANIEL-Ausbreitmaß., Der Verbrauch beträgt ca. 1,6-3kg/m².

Zuerst werden 4,0% Härterpulver (50%iges Dibenzoylperoxid phlegmatisiert in Phthalat) in die Komponente B eingerührt. Die zwei Komponenten A und B werden dann in separate Tanks der Extrusionsmaschine gegeben, die die Komponenten im Verhältnis 1:1 mischt und über eine Stachelwalze extrudiert. Komponente B ist bei Zimmertemperatur mit Härter mehrere Tage Lagerstabil. Bei 55°C jedoch nur 1-2 Stunden.

Die Topf- und Härtungszeiten betragen bei verschiedenen Temperaturen:

| Temperatur (°C) | Topfzeit (min) | Härtungszeit (min) |
|---|---|---|
| +5 | 8 | 18 |
| +20 | 3 | 8 |
| +45 | 3 | 11 |

Die Formulierung wurde als "Agglomerat" mit der Maschine "Plastomarker Junior" aufgetragen, Material Verbrauch ca. 3 kg /m² - Nachstreumittel Potters 3D-AC-05 (Typ II).

Die Verschleissfähikeit und verkehrtechnischen Eigenschaften wurden von der Bundesanstalt für Strassenwesen geprüft (Prüfnummer: 2005 1 DY 10.13)

| Eigenschaften | **Anzahl der Radüberrollungen (Mio)** | | | | | | | |
|---|---|---|---|---|---|---|---|---|
| | **0** | **0,1** | **0,2** | **0,5** | **1,0** | **2,0** | **3,0** | **4,0** |
| Verschleißfestigheit(%) | 100 | 100 | 100 | 100 | 100 | 100 | 100 | 100 |
| Griffigkeit (SRT-Einheiten) | 56 | 51 | 48 | 48 | 46 | 45 | 43 | 42 |
| Nachtsichtbarkeit, trocken (mcd*m-2 *Ix-1) | 282 | 355 | 335 | 316 | 335 | 356 | 298 | 299 |
| Nachtsichtbarkeit, feucht, 2% Neigung | 295 | 120 | 221 | 70 | 66 | 81 | 122 | 114 |
| Leuchtdichtekoeffizient Qd (mcd*m-2 *Ix-1) | 244 | 244 | 240 | 223 | 233 | 253 | 248 | 249 |
| Normfarbwert-Koordinaten | x = 0,332 | | | | y = 0,349 | | | |

## Patentansprüche

1. Methacrylatharze, enthaltend
0,1-15 Gew.-% Urethan(meth)acrylate,
30-50 Gew.-% Methylmethacrylate,
15-40 Gew.-% (Meth)acryl-polymere und/oder Comonomere,
0-10 Gew.-% Vernetzer,
0-5 Gew.-% Beschleuniger
und weitere Hilfs- und Zusatzstoffe.

2. Methacrylatharze gemäß Anspruch 1, enthaltend
3-10 Gew.-% Urethan(meth)acrylate,
35-45 Gew.-% Methylmethacrylate,
25-35 Gew.-% (Meth)acryl-polymere und/oder Comonomere,
0-3 Gew.% Vernetzer,
0-3 Gew.-% Beschleuniger
und weitere Hilfs- und Zusatzstoffe.

3. Methacrylatharze gemäß Anspruch 1 oder 2, **dadurch gekennzeichnet, dass** als Hilfs- und Zusatzstoffe Regler, Weichmacher, Stabilisatoren/Inhibitoren, Wachse, Öle, Aktivatoren und/oder Entschäumer eingesetzt werden.

4. Methacrylatharze gemäß Anspruch 1 oder 2, **dadurch gekennzeichnet, dass** als Vernetzer mehrfunktionelle Methacrylate wie Allyl-methacrylat, Ethylenglykcol-dimethacrylat, Diethylenglykol-dimethacrylat, Triethylenglykol-dimethacrylat, Tetraethylen-glykol-dimethacrylat, Polyethylenglykol-dimethacrylat, 1,3-Butandiol-dimethacrylat, 1,4-Butandiol-dimethacrylat, 1,6-Hexandiol-dimethacrylat, 1,12-Dodecandiol-dimethacrylat, Glycerol-dimethacrylat, Trimethylolpropan-trimethacrylat, eingesetzt werden.

5. Methacrylatharze gemäß Anspruch 1 oder 2, **dadurch gekennzeichnet, dass** als Beschleuniger tertiäre aromatisch substituierte Amine eingesetzt werden.

6. Formulierung auf Basis von Methacrylatharzen gemäß Anspruch 1 bis 5 enthaltend, Farbstoffe, Glasperlen, Fein- und Grobfüllstoffe, Netz-, Dispergier- und Verlaufshilfsmittel, UV-Stabilisatoren, und Rheologieadditive.

7. Formulierung gemäß Anspruch 6, **dadurch gekennzeichnet, dass** anorganische Pigmente, bevorzugt Titandioxid eingesetzt werden.

8. Formulierung gemäß Anspruch 6, **dadurch gekennzeichnet, dass** Glasperlen oder silanisierte Glasperlen mit Durchmessern von 10 -2000 µm verwendet werden.

9. Formulierung gemäß Anspruch 8, **dadurch gekennzeichnet, dass** Glasperlen oder silanisierte Glasperlen mit Durchmessern von 50 -800 µm verwendet werden.

10. Formulierung gemäß Anspruch 6, **dadurch gekennzeichnet, dass** Feinfüllstoffe aus der Gruppe der Calciumcarbonate, Bariumsulfate, Quarze, Quarzmehle, gefällte und pyrogene Kieselsäuren, Pigmente und Cristobalite eingesetzt werden.

11. Formulierung gemäß Anspruch 6, **dadurch gekennzeichnet, dass** als Grobfüllstoffe Quarze, Cristobalite, Korunde und Aluminiumsilikate eingesetzt werden.

12. Formulierung gemäß Anspruch 6, **dadurch gekennzeichnet, dass** Netz-, Dispergier- und Verlaufshilfsmittel vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt werden.

13. Formulierung gemäß Anspruch 6, **dadurch gekennzeichnet, dass** UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate eingesetzt werden.

14. Formulierung gemäß Anspruch 6, **dadurch gekennzeichnet, dass** Rheologieadditive ausgewählt aus der Gruppe der Polyhydroxycarbonsäureamiden, Harnstoffderivaten, Salzen ungesättigter Carbonsäureester, Alkylamoniumsalze saurer Phosphorsäurederivat, Ketoximen, Aminsalzen der p-Toluolsulfonsäure, Aminsalze von Sulfonsäurederivaten sowie wässrige oder organische Lösungen oder Mischungen der Verbindungen verwendet werden.

15. Formulierung gemäß Anspruch 6, **dadurch gekennzeichnet, dass** Rheologieadditive auf Basis pyrogener oder gefällter Kieselsäuren mit einer BET-Oberfläche von 10-700 nm²/g eingesetzt werden.

16. Formulierung gemäß Anspruch 6, **dadurch gekennzeichnet, dass** Rheologieadditive auf Basis silanisierter pyrogener oder gefällter Kieselsäuren mit einer BET-Oberfläche von 10-700 nm²/g eingesetzt werden.

17. Verwendung von Methacrylatharzen gemäß Anspruch 1-5 zur Herstellung von Formulierungen für Fahrbahnmarkierungen und Bodenbeschichtungen.

18. Verwendung von Formulierungen gemäß Anspruch 6-16 für Bodenbeschichtungen und Fahrbahnmarkierungen auf Ashalt, Beton und Steingut.

19. Verwendung von Formulierungen gemäß Anspruch 6-16 zur Überarbeitung von alten Beschichtungen und Markierungen.

## Claims

1. Methacrylate resins, containing
from 0.1 to 15% by weight of urethane (meth)acrylates,
from 30 to 50% by weight of methyl methacrylates,
from 15 to 40% by weight of (meth)acrylic polymers and/or of comonomers,
from 0 to 10% by weight of crosslinking agents,
from 0 to 5% by weight of accelerators
and of other auxiliaries and additives.

2. Methacrylate resins according to Claim 1, containing
from 3 to 10% by weight of urethane (meth)acrylates,
from 35 to 45% by weight of methyl methacrylates,
from 25 to 35% by weight of (meth)acrylic polymers and/or of comonomers,
from 0 to 3% by weight of crosslinking agents,
from 0 to 3% by weight of accelerators
and of other auxiliaries and additives.

3. Methacrylate resins according to Claim 1 or 2, **characterized in that** the auxiliaries and additives used comprise chain transfer agents, plasticizers, stabilizers/inhibitors, waxes, oils, activators and/or antifoams.

4. Methacrylate resins according to Claim 1 or 2, **characterized in that** the crosslinking agents used are polyfunctional methacrylates such as allyl methacrylate, ethylene glycol dimethacrylate, diethylene glycol dimethacrylate, triethylene glycol dimethacrylate, tetraethylene glycol dimethacrylate, polyethylene glycol dimethacrylate, 1,3-butanediol dimethacrylate, 1,4-butanediol dimethacrylate, 1,6-hexanediol dimethacrylate, 1,12-dodecanediol dimethacrylate, glycerol dimethacrylate, trimethylolpropane trimethacrylate.

5. Methacrylate resins according to Claim 1 or 2, **characterized in that** the accelerators used are aromatic-substituted tertiary amines.

6. Formulation based on methacrylate resins according to any of Claims 1 to 5 comprising pigments, glass beads, fine and coarse fillers, wetting agents, dispersing agents and flow-control agents, UV stabilizers, and rheology additives.

7. Formulation according to Claim 6, **characterized in that** inorganic pigments are used, preferably titanium dioxide.

8. Formulation according to Claim 6, **characterized in that** glass beads or silanized glass beads with diameters of from 10 to 2000 µm are used.

9. Formulation according to Claim 8, **characterized in that** glass beads or silanized glass beads with diameters of from 50 to 800 µm are used.

10. Formulation according to Claim 6, **characterized in that** fine fillers are used from the group of the calcium carbonates, barium sulphates, quartzes, powder quartzes, precipitated and fumed silicas, pigments and cristobalites.

11. Formulation according to Claim 6, **characterized in that** the coarse fillers used comprise quartzes, cristobalites, corundums and aluminium silicates.

12. Formulation according to Claim 6, **characterized in that** the wetting agents, dispersing agents and flow-control agents used are preferably selected from the group of the alcohols, hydrocarbons, glycol derivatives, polyethers, polysiloxanes, polycarboxylic acids, saturated and unsaturated polycarboxylic amine amides, and derivatives of glycolic esters, of acetic esters and of polysiloxanes.

13. Formulation according to Claim 6, **characterized in that** the UV stabilizers used are selected from the group of the benzophenone derivatives, benzotriazole derivatives, thioxanthonate derivatives, piperidinolcarboxylic ester derivatives or cinnamic ester derivatives.

14. Formulation according to Claim 6, **characterized in that** rheology additives used have been selected from the group of the polyhydroxycarboxamides, urea derivatives, salts of unsaturated carboxylic esters, alkylammonium salts of acidic phosphoric acid derivatives, ketoximes, amine salts of p-toluenesulphonic acid, amine salts of sulphonic acid derivatives and aqueous or organic solutions or mixtures of the compounds.

15. Formulation according to Claim 6, **characterized in that** rheology additives based on fumed or precipitated silicas whose BET surface area is from 10 to 700 nm²/g are used.

16. Formulation according to Claim 6, **characterized in that** rheology additives based on silanized fumed or precipitated silicas whose BET surface area is from 10 to 700 nm²/g are used.

17. Use of methacrylate resins according to any of Claims 1 to 5 for preparation of formulations for road markings and floor coatings.

18. Use of formulations according to any of Claims 6 to 16 for floor coatings and road markings on asphalt, concrete and earthenware.

19. Use of formulations according to any of Claims 6 to 16 for renovation of old coatings and markings.

## Revendications

1. Résines de méthacrylate, contenant
0,1-15 % en poids d'uréthanne(méth)acrylate,
30-50 % en poids de méthacrylate de méthyle,
15-40 % en poids de polymère et/ou comonomère (méth)acrylique,
0-10 % en poids d'agent de réticulation,
0-5 % en poids d'accélérateur
et d'autres adjuvants et additifs.

2. Résines de méthacrylate selon la revendication 1, contenant
3-10 % en poids d'uréthanne(méth)acrylate,
35-45 % en poids de méthacrylate de méthyle,
25-35 % en poids de polymère et/ou comonomère (méth)acrylique,
0-3 % en poids d'agent de réticulation,
0-3 % en poids d'accélérateur
et d'autres adjuvants et additifs.

3. Résines de méthacrylate selon la revendication 1 ou 2, **caractérisées en ce qu'**elles sont utilisées en tant qu'adjuvants et additifs régulateurs, plastifiants, stabilisants/inhibiteurs, cires, huiles, activateurs et/ou antimousses.

4. Résines de méthacrylate selon la revendication 1 ou 2, **caractérisées en ce qu'**on utilise comme agent de réticulation des méthacrylates polyfonctionnels tels que le méthacrylate d'allyle, le diméthacrylate d'éthylèneglycol, le diméthacrylate de diéthylèneglycol, le diméthacrylate de triéthylèneglycol, le diméthacrylate de tétraéthylèneglycol, le diméthacrylate de polyéthylèneglycol, le diméthacrylate de 1,3-butanediol, le diméthacrylate de 1,4-butanediol, le diméthacrylate de 1,6-hexanediol, le diméthacrylate de 1,12-dodécanediol, le diméthacrylate de glycérol, le triméthacrylate de triméthylolpropane.

5. Résines de méthacrylate selon la revendication 1 ou 2, **caractérisées en ce qu'**on utilise comme accélérateur des amines tertiaires à substitution aromatique.

6. Composition à base de résines de méthacrylate selon l'une quelconque des revendications 1 à 5, contenant des pigments, des perles de verre, des charges en fines particules et des charges en grosses particules, des agents mouillants, des dispersants et des agents auxiliaires d'étalement, des stabilisants UV et des additifs rhéologiques.

7. Composition selon la revendication 6, **caractérisée en ce qu'**on utilise des pigments inorganiques, le dioxyde de titane de préférence.

8. Composition selon la revendication 6, **caractérisée en ce qu'**on utilise des perles de verre ou des perles de verre silanées à diamètres de 10-2000 µm.

9. Composition selon la revendication 8, **caractérisée en ce qu'**on utilise des perles de verre ou des perles de verre silanées à diamètres de 50-800 µm.

10. Composition selon la revendication 6, **caractérisée en ce qu'**on utilise des charges en fines particules qui sont choisies dans le groupe des carbonates de calcium, sulfates de baryum, quartz, poudres de quartz, acides siliciques précipités et acides siliciques pyrogénés, pigments et cristobalites.

11. Composition selon la revendication 6, **caractérisée en ce qu'**on utilise comme charges en grosses particules des quartz, des cristobalites, des corindons et des silicates d'aluminium.

12. Composition selon la revendication 6, **caractérisée en ce qu'**on utilise des agents mouillants, des dispersants et des agents auxiliaires d'étalement de préférence choisis dans le groupe des alcools, hydrocarbures, dérivés de glycol, dérivés d'esters d'acide glycolique, esters d'acide acétique et polysiloxanes, polyéthers, polysiloxanes, poly(acide carboxylique)s, poly(carboxamine-amide)s saturés ou insaturés.

13. Composition selon la revendication 6, **caractérisée en ce qu'**on utilise des stabilisants UV choisis dans le groupe des dérivés de benzophénone, dérivés de benzotriazole, dérivés de thioxanthonate, dérivés d'esters d'acide pipéridinolcarboxylique ou dérivés d'esters d'acide cinnamique.

14. Composition selon la revendication 6, **caractérisée en ce qu'**on utilise des additifs rhéologiques choisis dans le groupe des polyhydroxycarboxamides, dérivés d'urée, sels d'esters d'acides carboxyliques insaturés, sels d'alkylammonium de dérivés acides d'acide phosphorique, cétoximes, sels d'amines de l'acide p-toluènesulfonique, sels d'amines de dérivés d'acide sulfonique, ainsi que des solutions aqueuses ou organiques ou des mélanges des composés.

15. Composition selon la revendication 6, **caractérisée en ce qu'**on utilise des additifs rhéologiques à base d'acides siliciques précipités ou pyrogénés, ayant une surface BET de 10-700 nm²/g.

16. Composition selon la revendication 6, **caractérisée en ce qu'**on utilise des additifs rhéologiques à base d'acides siliciques silanés précipités ou pyrogénés, ayant une surface BET de 10-700 nm²/g.

17. Utilisation de résines de méthacrylate selon l'une quelconque des revendications 1 à 5, pour la préparation de compositions pour revêtements de sol et marquages au sol de voies de circulation.

18. Utilisation de compositions selon l'une quelconque des revendications 6 à 16, pour des revêtements de sol et des marquages au sol de voies de circulation sur asphalte, béton et grès cérame.

19. Utilisation de compositions selon l'une quelconque des revendications 6 à 16, pour la reprise d'anciens revêtements et marquages.
